# EUROPEAN PATENT APPLICATION

(11) **EP 3 890 333 A1**
(43) Date of publication of application: **06.10.2021**
(21) Application number: 19896863.8
(22) Date of filing: 02.12.2019
(51) Int. Cl.: H04N 21/44, H04N 21/439, H04N 21/472, G10L 15/08

(54) **VIDEO CUTTING METHOD AND APPARATUS, COMPUTER DEVICE AND STORAGE MEDIUM**

(30) Priority: 14.12.2018 CN 201811536818
(71) Applicant: One Connect Smart Technology Co., Ltd. (Shenzhen), Shenzhen, Guangdong 518052 (CN)
(72) Inventor: WANG, Zhenhua, Shenzhen, Guangdong 518052 (CN)
(74) Representative: De Arpe Tejero, Manuel
(86) International application number: PCT/CN2019/122472
(87) International publication number: WO 2020/119508

(57) **Abstract**

Disclosed is a video cutting method, including: extracting to-be-identified video data from video stream data, and extracting image data and audio data from the to-be-identified video data; inputting the image data into a preset marking behavior recognition model to obtain a marking behavior recognition result, and inputting the audio data into a preset marking speech recognition model to obtain a marking speech recognition result; obtaining a marking recognition result based on the marking behavior recognition result, the marking speech recognition result, and a preset marking triggering rule; adding a cutting point identifier to the to-be-identified video data when a type of the marking recognition result is a marking operation; and performing cutting processing on the video stream data based on the cutting point identifier to obtain video segment data.

## Description

### CROSS-REFERENCE TO RELATED APPLICATIONS

This application claims priority to Chinese Patent Application 201811536818X, filed with the China National Intellectual Property Administration on December 14, 2018 and entitled "VIDEO CUTTING METHOD AND APPARATUS, COMPUTER DEVICE, AND STORAGE MEDIUM", which is incorporated herein by reference in its entirety.

### TECHNICAL FIELD

This application relates to a video cutting method and apparatus, a computer device, and a storage medium.

### BACKGROUND

With the development of multimedia technologies, there are vast applications of movies, television, news, socializing, education, and games that transmit information and resources in a video form, such as video chatting, video conferencing, video surveillance, and video dramas. Videos have become an important part of people's work, study, and life.

In video applications, cutting processing needs to be performed on videos in certain scenarios, such as television news extraction and sensitive information removal from recorded videos. The inventor is aware that, in current video cutting processing, manual marking is needed to determine locations on the timeline for cutting videos, and the video cutting processing efficiency is low.

### SUMMARY

According to various embodiments disclosed in this application, a video cutting method and apparatus, a computer device, and a storage medium are provided.

A video cutting method includes:
extracting to-be-identified video data from video stream data, and extracting image data and audio data from the to-be-identified video data;
inputting the image data into a preset marking behavior recognition model to obtain a marking behavior recognition result, and inputting the audio data into a preset marking speech recognition model to obtain a marking speech recognition result;
obtaining a marking recognition result based on the marking behavior recognition result, the marking speech recognition result, and a preset marking triggering rule;
adding a cutting point identifier to the to-be-identified video data when a type of the marking recognition result is a marking operation; and
performing cutting processing on the video stream data based on the cutting point identifier to obtain video segment data.

A video cutting apparatus includes:
an identified-data extraction module, configured to extract to-be-identified video data from video stream data, and extract image data and audio data from the to-be-identified video data;
a marking recognition processing module, configured to input the image data into a preset marking behavior recognition model to obtain a marking behavior recognition result, and input the audio data into a preset marking speech recognition model to obtain a marking speech recognition result;
a marking result obtaining module, configured to obtain a marking recognition result based on the marking behavior recognition result, the marking speech recognition result, and a preset marking triggering rule;
a cutting identifier adding module, configured to add a cutting point identifier to the to-be-identified video data when a type of the marking recognition result is a marking operation; and
a video cutting module, configured to perform cutting processing on the video stream data based on the cutting point identifier to obtain video segment data.

A computer device includes a memory and one or more processors, where the memory stores a computer-readable instruction, and when the computer-readable instruction is executed by the one or more processors, the one or more processors are enabled to perform the following steps:
extracting to-be-identified video data from video stream data, and extracting image data and audio data from the to-be-identified video data;
inputting the image data into a preset marking behavior recognition model to obtain a marking behavior recognition result, and inputting the audio data into a preset marking speech recognition model to obtain a marking speech recognition result;
obtaining a marking recognition result based on the marking behavior recognition result, the marking speech recognition result, and a preset marking triggering rule;
adding a cutting point identifier to the to-be-identified video data when a type of the marking recognition result is a marking operation; and
performing cutting processing on the video stream data based on the cutting point identifier to obtain video segment data.

One or more non-volatile computer-readable storage media that store a computer-readable instruction are provided. When the computer-readable instruction is executed by one or more processors, the one or more processors are enabled to perform the following steps:
extracting to-be-identified video data from video stream data, and extracting image data and audio data from the to-be-identified video data;
inputting the image data into a preset marking behavior recognition model to obtain a marking behavior recognition result, and inputting the audio data into a preset marking speech recognition model to obtain a marking speech recognition result;
obtaining a marking recognition result based on the marking behavior recognition result, the marking speech recognition result, and a preset marking triggering rule;
adding a cutting point identifier to the to-be-identified video data when a type of the marking recognition result is a marking operation; and
performing cutting processing on the video stream data based on the cutting point identifier to obtain video segment data.

Details of one or more embodiments of this application are provided in the following accompanying drawings and descriptions. Other features and advantages of this application become clear from the specification, the accompanying drawings, and the claims.

### BRIEF DESCRIPTION OF DRAWINGS

To describe the technical solutions in the embodiments of this application more clearly, the following briefly describes the accompanying drawings required for describing the embodiments. Apparently, the accompanying drawings in the following descriptions show merely some embodiments of this application, and a person of ordinary skill in the art may still derive other drawings from these accompanying drawings without creative efforts.
FIG. 1 is an application scenario diagram of a video cutting method according to one or more embodiments;
FIG. 2 is a schematic flowchart of a video cutting method according to one or more embodiments;
FIG. 3 is a schematic flowchart of responding to a marking-based cutting instruction according to one or more embodiments;
FIG. 4 is a schematic flowchart of a video cutting method according to another embodiment;
FIG. 5 is a structural diagram of a video cutting apparatus according to one or more embodiments; and
FIG. 6 is an internal structural diagram of a computer device according to one or more embodiments.

### DESCRIPTION OF EMBODIMENTS

To make the technical solutions and advantages of this application clearer and more comprehensible, the following further describes this application in detail with reference to the accompanying drawings and embodiments. It should be understood that the specific embodiments described herein are merely intended to explain this application, and are not intended to limit this application.

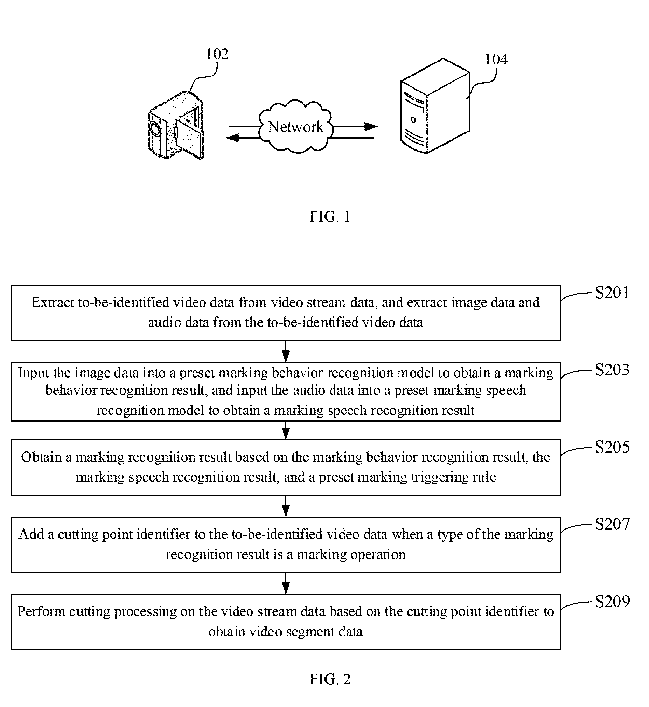

A video cutting method provided in this application may be applied to an application environment shown in FIG. 1. A recording device 102 communicates with a server 104 over a network. The recording device 102 performs video recording, and sends recorded video stream data to the server 104. The server 104 extracts image data and audio data from to-be-identified video data obtained from the video stream data, inputs the image data and the audio data respectively into a corresponding preset marking behavior recognition model and preset marking speech recognition model, and then obtains a marking recognition result based on an obtained marking behavior recognition result, an obtained marking speech recognition result, and a preset marking triggering rule. When a type of the marking recognition result is a marking operation, a cutting point identifier is added to the to-be-identified video data, and finally the video stream data is cut based on the cutting point identifier to obtain video segment data.

The recording device 102 may be but is not limited to various video recording cameras or terminals with a video recording function, such as personal computers, laptops, smartphones, tablets, and portable wearable devices, and the server 104 may be implemented by a standalone server or a server cluster including multiple servers.

In an embodiment, as shown in FIG. 2, a video cutting method is provided. An example in which the method is applied to the server 104 in FIG. 1 is used for description. The method includes the following steps.

Step S201: Extract to-be-identified video data from video stream data, and extract image data and audio data from the to-be-identified video data.

In this embodiment, the to-be-identified video data is extracted from the video stream data. The video stream data is video data that needs to be cut, and may be recorded by a recording device. For example, for a face-to-face verification process in the financial industry, the video stream data may be video data recorded in real time by a camera during video and audio recording. The to-be-identified video data is video data of a preset identification length. The identification length is set based on an actual requirement. Marking recognition may be performed on the to-be-identified video data to add a corresponding cutting point identifier. Performing marking recognition on the to-be-identified video data of the preset identification length allows cutting recorded video data in real time, thereby ensuring video cutting timeliness and improving video cutting efficiency.

Generally, the video data includes images and audio, and marking recognition can be performed on both the images and the audio. Specifically, when marking recognition is performed on the to-be-identified video data, the image data and the audio data are extracted from the to-be-identified video data, so as to separately perform recognition processing on both the image data and the audio data in the to-be-identified video data. In this way, it can be identified whether a marking behavior occurs in the video images or whether a marking speech occurs in the video audio, thereby implementing marking recognition on the image behavior and the audio speech, and improving marking recognition accuracy.

Step S203: Input the image data into a preset marking behavior recognition model to obtain a marking behavior recognition result, and input the audio data into a preset marking speech recognition model to obtain a marking speech recognition result.

After the image data and the audio data are extracted from the to-be-identified video data, the image data and the audio data are separately input into the corresponding marking behavior recognition model and marking speech recognition model for marking recognition. The marking behavior recognition model may be based on an artificial neural network algorithm, and may be obtained by training historical marking behavior data of a business person in a business system in a corresponding business scenario, for example, the historical marking behavior data may be marking behavior actions such as an applause action, a hands-up action, or a knocking action. The marking speech recognition model may be obtained by training historical marking speech data of a business person, for example, the historical marking speech data may be speech marking of keywords such as "first, second, and third".

In this embodiment, in one aspect, the image data is input into the preset marking behavior recognition model to perform marking behavior recognition and obtain the marking behavior recognition result; in the other aspect, the audio data is input into the preset marking speech recognition model to perform marking speech recognition and obtain the marking speech recognition result. Separately performing marking recognition on the image data and the audio data can increase diversity of marking operations, improve business process smoothness, and ensure video cutting accuracy.

Step S205: Obtain a marking recognition result based on the marking behavior recognition result, the marking speech recognition result, and a preset marking triggering rule.

After the marking behavior recognition result and the marking speech recognition result are obtained, the two results are combined to obtain the marking recognition result. Specifically, the preset marking triggering rule is queried, where the marking triggering rule is set based on an actual business requirement. For example, the preset marking triggering rule may be set as follows: An OR operation is performed on the marking behavior recognition result and the marking speech recognition result. To be specific, if a type of either of the marking behavior recognition result and the marking speech recognition result is a marking operation, that is, when a cutting point identifier needs to be added, marking is triggered and the obtained marking recognition result is a marking operation. Alternatively, the preset marking triggering rule may be set as follows: An AND operation is performed on the marking behavior recognition result and the marking speech recognition result. To be specific, only when types of the marking behavior recognition result and the marking speech recognition result are each a marking operation, marking is triggered and the obtained marking recognition result is a marking operation.

Step S207: Add a cutting point identifier to the to-be-identified video data when a type of the marking recognition result is a marking operation.

After the marking recognition result is obtained, the type of the marking recognition result is determined. When the type of the marking recognition result is a marking operation, it indicates that the image data and/or the audio data in the to-be-identified video data have/has triggered marking, and the to-be-identified video data is in a video cutting location, and marking processing is performed on the to-be-identified video data. Specifically, a cutting point identifier may be added to the to-be-identified video data. The cutting point identifier is used to identify a cutting point for video cutting. During cutting of the video stream data, the cutting point identifier may be directly searched for to perform cutting processing.

In specific implementation, the cutting point identifier may be a cutting label. When the cutting point identifier is added to the to-be-identified video data, a key frame is determined from the to-be-identified video data based on a preset label adding rule. For example, the first frame in the to-be-identified video data is used as the key frame, and a cutting label is added to the key frame. The cutting label may include a cutting point sequence number and a cutting time value, but is not limited thereto.

Step S209: Perform cutting processing on the video stream data based on the cutting point identifier to obtain video segment data.

When cutting processing is performed on the video stream data, the cutting point identifier in the video stream data is searched for, and cutting processing is performed based on the cutting point identifier to split the video stream data and obtain the video segment data.

In the foregoing video cutting method, the image data and the audio data are extracted from the to-be-identified video data obtained from the video stream data, the image data and the audio data are respectively input into the corresponding preset marking behavior recognition model and preset marking speech recognition model, and then the marking recognition result is obtained based on the obtained marking behavior recognition result, the obtained marking speech recognition result, and the preset marking triggering rule. When the type of the marking recognition result is a marking operation, a cutting point identifier is added to the to-be-identified video data, and finally the video stream data is cut based on the cutting point identifier to obtain the video segment data. In the video cutting process, marking recognition may be performed based on the image data and the audio data in the to-be-identified video data, and a cutting point identifier may be added. No manual marking operation is needed, thereby improving video cutting processing efficiency.

In some embodiments, the extracting to-be-identified video data from video stream data includes: obtaining the video stream data; determining a video stream identification length; and extracting the to-be-identified video data from the video stream data based on the video stream identification length.

Marking recognition processing cannot be directly performed on video stream data directly recorded by the recording device 102. The video stream data needs to be split into to-be-identified video data of a fixed identification length, and marking recognition is performed on the to-be-identified video data. In this embodiment, when the to-be-identified video data is extracted from the video stream data, in one aspect, the video stream data may be first obtained. Specifically, video stream data recorded in real time may be directly received from the recording device 102, or video stream data that has been recorded may be read from a preset memory. In the other aspect, the video stream identification length is determined, where the video stream identification length is set based on an actual requirement. For example, the video stream identification length may be set based on input requirements of the marking behavior recognition model and the marking speech recognition model, or may be set based on processing resources of the server 104. After the video stream identification length is determined, the to-be-identified video data is extracted from the video stream data based on the video stream identification length. In specific applications, to-be-identified video data that meets the video stream identification length may be successively extracted from the video stream data, and then marking recognition processing may be subsequently performed on the extracted to-be-identified video data.

In an embodiment, the inputting the image data into a preset marking behavior recognition model to obtain a marking behavior recognition result, and inputting the audio data into a preset marking speech recognition model to obtain a marking speech recognition result includes: determining identification information of a business person corresponding to the to-be-identified video data; querying a preset marking behavior recognition model and a preset marking speech recognition model separately corresponding to the identification information; extracting image feature data from the image data, and extracting audio feature data from the audio data; and inputting the image feature data into the marking behavior recognition model to obtain a marking behavior recognition result, and inputting the audio feature data into the marking speech recognition model to obtain a marking speech recognition result.

In this embodiment, both the marking behavior recognition model and the marking speech recognition model are obtained by training historical marking data of each business person in the business system. Generally, in a video and audio recording process for face-to-face verification of businesses, different business systems may have different marking operation requirements, and different business persons may also have different marking operation habits.

Specifically, when the image data is input into the preset marking behavior recognition model to obtain the marking behavior recognition result, and the audio data is input into the preset marking speech recognition model to obtain the marking speech recognition result, the identification information of the business person corresponding to the to-be-identified video data is first determined. In applications, a recording device 102 is disposed in a service window of each business. The corresponding business person may be determined based on a source of the to-be-identified video data, that is, the recording device 102, and identification information corresponding to the business person may be further queried. The identification information may be but is not limited to identity information that can uniquely identify the business person, such as an employee number and an employee name. After the identification information is determined, a preset marking behavior recognition model and a preset marking speech recognition model that correspond to the identification information are queried. The marking behavior recognition model and the marking speech recognition model are respectively obtained by training historical marking behavior data and historical marking speech data of the corresponding business person, and therefore provide highly specific marking recognition and have high recognition accuracy.

After the marking behavior recognition model and the marking speech recognition model are obtained, in one aspect, the image feature data is extracted from the image data, and the image feature data is input into the marking behavior recognition model to obtain the marking behavior recognition result. In the other aspect, the audio feature data is extracted from the audio data, and the audio feature data is input into the marking speech recognition model to obtain the marking speech recognition result. When marking recognition is performed on the image data and the audio data, feature extraction is performed and useless redundant information is filtered out to obtain the image feature data and the audio feature data, and subsequent marking recognition processing is performed to obtain the marking behavior recognition result and the marking speech recognition result.

In an embodiment, before the querying a preset marking behavior recognition model and a preset marking speech recognition model separately corresponding to the identification information, the method further includes: obtaining historical behavior image data and historical marking speech data from a business system; classifying the historical behavior image data and the historical marking speech data by business person to obtain historical behavior image data corresponding to each business person and historical marking speech data corresponding to each business person; training the historical behavior image data corresponding to each business person to obtain the marking behavior recognition model; and training the historical marking speech data corresponding to each business person to obtain the marking speech recognition model.

During the training of the marking behavior recognition model and the marking speech recognition model, the historical behavior image data and the historical marking speech data are first obtained from the business system. The historical behavior image data may be marking image data recorded during video and audio recording of each business person in the business system during face-to-face verification of businesses. For example, the historical behavior image data may include marking behaviors such as applause, hands-up, hands-crossing, and nodding. Similar to the historical behavior image data, the historical marking speech data may be keyword statements such as "the X^{th} problem" and "OK, thank you". In specific applications, business persons have different personal habits, and their corresponding historical behavior image data and historical marking speech data also present different marking operations. Therefore, the historical behavior image data and the historical marking speech data are classified by business person to construct a corresponding marking behavior recognition model and marking speech recognition model for each business person.

Specifically, the historical behavior image data corresponding to each business person is trained to obtain the marking behavior recognition model; and the historical marking speech data corresponding to each business person is trained to obtain the marking speech recognition model. In specific implementation, the historical behavior image data may be divided into a training sample set and a test sample set. The training sample set is trained by using a supervised learning method to obtain a marking behavior model to be tested. Then, the test sample set is used to perform a recognition precision test on the marking behavior model to be tested, and the marking behavior recognition model is obtained after the recognition precision test succeeds. A training process of the marking speech recognition model is similar to that of the marking behavior recognition model.

In an embodiment, the obtaining a marking recognition result based on the marking behavior recognition result, the marking speech recognition result, and a preset marking triggering rule includes: querying a preset marking triggering rule, where the marking triggering rule includes a behavior triggering rule and a speech triggering rule; comparing the marking behavior recognition result with the behavior triggering rule to obtain a behavior triggering result; comparing the marking speech recognition result with the speech triggering rule to obtain a speech triggering result; and obtaining the marking recognition result based on the behavior triggering result and the speech triggering result.

After the marking behavior recognition result and the marking speech recognition result are obtained, the marking recognition result is obtained based on a marking triggering rule for an actual business requirement. Specifically, the preset marking triggering rule is queried, where the marking triggering rule is set based on an actual business requirement. Specifically, the marking triggering rule may be set based on a business type and a habit of a business person. For example, the marking triggering rule may be set as follows: It is considered that marking is triggered when an applause behavior of a business person is recognized in the image data or a key statement "the X^{th} problem" is recognized in the audio data. The marking triggering rule includes the behavior triggering rule and the speech triggering rule, which respectively correspond to marking recognition on the image data and marking recognition on the audio data.

In one aspect, the marking behavior recognition result is compared with the behavior triggering rule to obtain the behavior triggering result; in the other aspect, the marking speech recognition result is compared with the speech triggering rule to obtain the speech triggering result. Finally, the marking recognition result is obtained by combining the behavior triggering result and the speech triggering result. For example, an OR operation may be performed on the behavior triggering result and the speech triggering result, that is, when a type of either of the behavior triggering result and the speech triggering result is a marking operation, a type of the obtained marking recognition result is a marking operation, and the cutting point identifier is added to the to-be-identified video data.

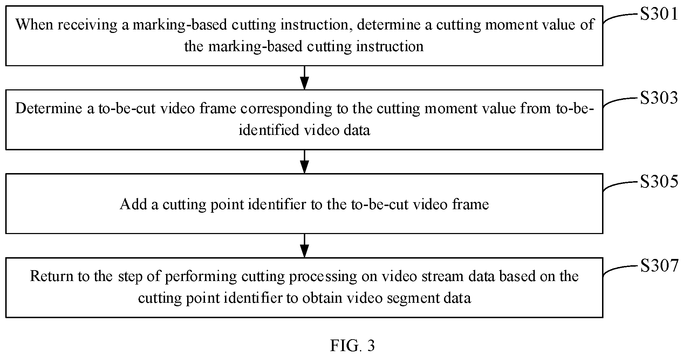

In an embodiment, as shown in FIG. 3, the method further includes steps of responding to a marking-based cutting instruction, specifically including:
Step S301: When receiving a marking-based cutting instruction, determine a cutting moment value of the marking-based cutting instruction.

In this embodiment, in addition to extracting the to-be-identified video data from the video stream data and performing marking recognition on the to-be-identified video data, manual marking may further be implemented in response to a marking-based cutting instruction sent from the outside. Specifically, when the marking-based cutting instruction is received, a cutting moment value of the marking-based cutting instruction is determined. The marking-based cutting instruction may be sent from the outside, for example, sent by a business person by clicking a related marking button. The cutting moment value is a sending time of the marking-based cutting instruction, and reflects a location on a timeline in which a marking operation needs to be performed on the video stream data.

Step S303: Determine a to-be-cut video frame corresponding to the cutting moment value from the to-be-identified video data.

After the cutting moment value of the marking-based cutting instruction is determined, the to-be-cut video frame corresponding to the cutting moment value is determined from the to-be-identified video data. Generally, when the marking-based cutting instruction is sent from the outside, it indicates that a marking operation is needed for a video frame corresponding to the moment in the to-be-identified video data. The corresponding to-be-cut video frame may be determined from the timeline of the to-be-identified video data based on the cutting moment value of the marking-based cutting instruction.

Step S305: Add a cutting point identifier to the to-be-cut video frame.

After the to-be-cut video frame is determined, the cutting point identifier is added to the to-be-cut video frame, and the cutting point identifier is used to identify a cutting point for video cutting. During cutting of the video stream data, the cutting point identifier may be directly searched for to perform cutting processing.

Step S307: Return to the step of performing cutting processing on the video stream data based on the cutting point identifier to obtain video segment data.

After the cutting point identifier is added, the process returns to the step of performing cutting processing on the video stream data based on the cutting point identifier. The cutting point identifier in the video stream data is searched for, and then cutting processing is performed based on the cutting point identifier to split the video stream data to obtain the video segment data.

In this embodiment, in addition to performing marking recognition on the image data and the audio data in the to-be-identified video data, the marking-based cutting instruction sent from the outside is further received in real time, and video cutting processing is performed based on the marking-based cutting instruction to implement external control on video cutting, thereby effectively increasing operation diversity of video cutting and improving video cutting processing efficiency.

In some embodiments, after the video segment data is obtained, the method further includes: extracting audio segment data from the video segment data; querying a preset speech recognition model; inputting the audio segment data into the speech recognition model to obtain transcription data of the video segment data; and determining a business type corresponding to the video segment data based on the transcription data, and storing the video segment data in a storage location corresponding to the business type.

In this embodiment, after the video segment data cut from the video stream data is obtained, the video segment data may be stored in the corresponding storage location based on the business type of the respective video segment data. Specifically, the audio segment data is extracted from the video segment data, where the audio segment data includes conversation data in the video segment data, and the business type corresponding to the video segment data may be determined based on the audio segment data. The preset speech recognition model is queried, where the speech recognition model may perform speech recognition on input speech data to obtain corresponding transcription data.

In this embodiment, the audio segment data is input into the speech recognition model to obtain the transcription data of the video segment data, where the transcription data may be data in the text form, and the business type corresponding to the video segment data may be determined based on the transcription data. In specific implementation, a business keyword may be extracted from the transcription data, and a corresponding business type is matched based on the obtained business keyword. After the business type corresponding to the video segment data is determined, the video segment data is stored in the storage location corresponding to the business type. For example, a preset storage location corresponding to the business type may be queried, and the video segment data may be stored in the storage location, thereby implementing automatic classification and storage of the video segment data.

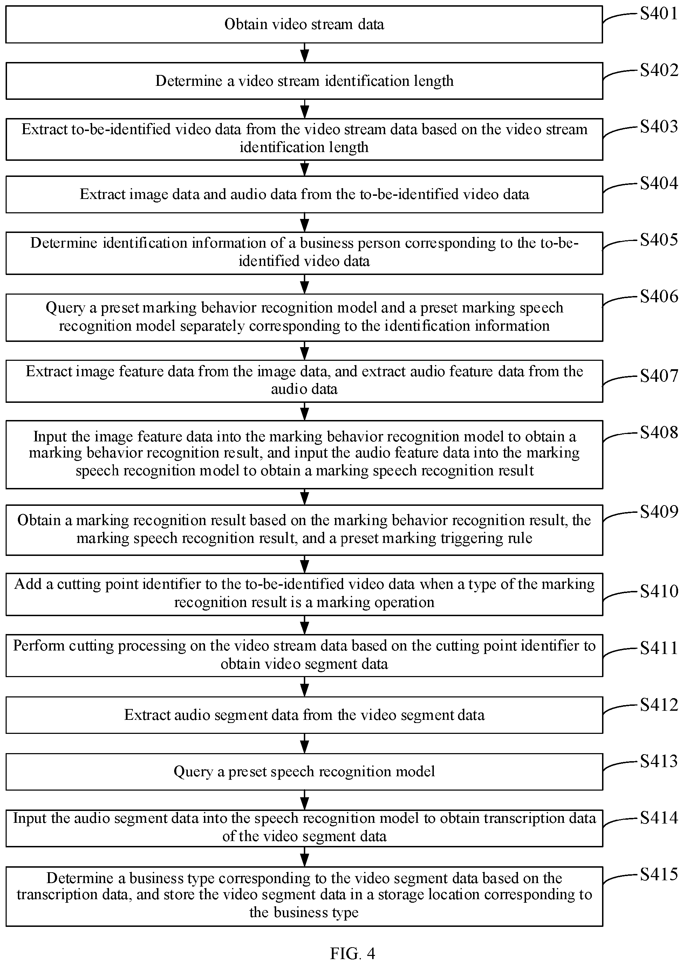

In an embodiment, as shown in FIG. 4, a video cutting method is provided, including:
Step S401: Obtain video stream data.
Step S402: Determine a video stream identification length.
Step S403: Extract to-be-identified video data from the video stream data based on the video stream identification length.
Step S404: Extract image data and audio data from the to-be-identified video data.

In this embodiment, the server 104 receives video stream data sent by the recording device 102, determines a video stream identification length specified based on an actual requirement, successively extracts, based on the video stream identification length, to-be-identified video data that meets the video stream identification length from the video stream data, and then performs subsequent marking recognition processing on the extracted to-be-identified video data.

Step S405: Determine identification information of a business person corresponding to the to-be-identified video data.

Step S406: Query a preset marking behavior recognition model and a preset marking speech recognition model separately corresponding to the identification information.

Step S407: Extract image feature data from the image data, and extract audio feature data from the audio data.

Step S408: Input the image feature data into the marking behavior recognition model to obtain a marking behavior recognition result, and input the audio feature data into the marking speech recognition model to obtain a marking speech recognition result.

After the image data and the audio data are obtained, a corresponding business person is determined based on a source of the to-be-identified video data, that is, the recording device 102, and identification information corresponding to the business person is further queried, where the identification information is an employee number and/or an employee name. A corresponding preset marking behavior recognition model and preset marking speech recognition model that correspond to the identification information are queried. The marking behavior recognition model and the marking speech recognition model are respectively obtained by training historical marking behavior data and historical marking speech data of the corresponding business person, and therefore provide highly specific marking recognition and have high recognition accuracy. In one aspect, the image feature data is extracted from the image data, and the image feature data is input into the marking behavior recognition model to obtain the marking behavior recognition result. In the other aspect, the audio feature data is extracted from the audio data, and the audio feature data is input into the marking speech recognition model to obtain the marking speech recognition result.

Step S409: Obtain a marking recognition result based on the marking behavior recognition result, the marking speech recognition result, and a preset marking triggering rule.

After the marking behavior recognition result and the marking speech recognition result are obtained, the marking recognition result is obtained based on a marking triggering rule for an actual business requirement. Specifically, the following may be included: querying a preset marking triggering rule, where the marking triggering rule includes a behavior triggering rule and a speech triggering rule; comparing the marking behavior recognition result with the behavior triggering rule to obtain a behavior triggering result; comparing the marking speech recognition result with the speech triggering rule to obtain a speech triggering result; and obtaining the marking recognition result based on the behavior triggering result and the speech triggering result.

Step S410: Add a cutting point identifier to the to-be-identified video data when a type of the marking recognition result is a marking operation.

Step S411: Perform cutting processing on the video stream data based on the cutting point identifier to obtain video segment data.

After the marking recognition result is obtained, a type of the marking recognition result is determined. When the type of the marking recognition result is a marking operation, it indicates that the to-be-identified video data is a cutting point, and marking processing is performed on the to-be-identified video data. Specifically, a cutting point identifier may be added to the to-be-identified video data. The cutting point identifier in the video stream data is searched for to perform cutting processing based on the cutting point identifier, so that the video stream data is split to obtain the video segment data.

Step S412: Extract audio segment data from the video segment data.

Step S413: Query a preset speech recognition model.

Step S414: Input the audio segment data into the speech recognition model to obtain transcription data of the video segment data.

Step S415: Determine a business type corresponding to the video segment data based on the transcription data, and store the video segment data in a storage location corresponding to the business type.

In this embodiment, after the video segment data cut from the video stream data is obtained, the video segment data may be stored in the corresponding storage location based on the business type of the respective video segment data, thereby implementing automatic classification and storage of the video segment data.

It should be understood that although the steps in the flowcharts of FIG. 2 to FIG. 4 are shown in sequence indicated by arrows, these steps are not necessarily performed in such sequences. Unless expressly stated herein, these steps are not limited to a strict execution sequence, and may be performed in another sequence. In addition, at least some of the steps in FIG. 2 to FIG. 4 may include a plurality of substeps or stages. These substeps or stages are not necessarily performed and completed at the same moment, but may be performed at different moments. These substeps or stages are not necessarily performed in sequence, either, but may be performed in turn or alternately with other steps or at least some substeps or stages of the other steps.

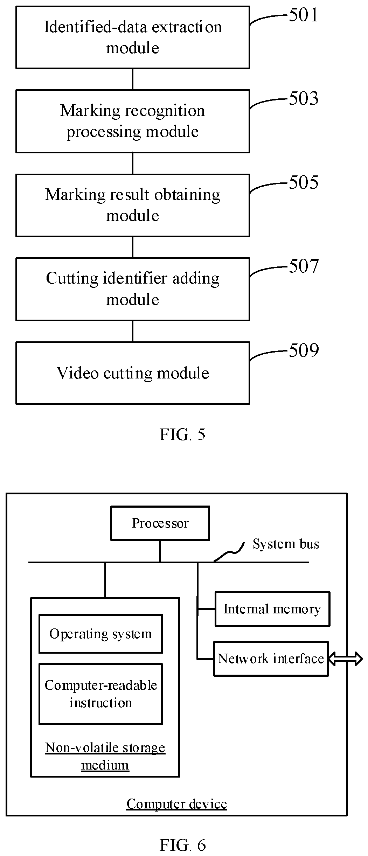

In an embodiment, as shown in FIG. 5, a video cutting apparatus is provided, including an identified-data extraction module 501, a marking recognition processing module 503, a marking result obtaining module 505, a cutting identifier adding module 507, and a video cutting module 509.

The identified-data extraction module 501 is configured to extract to-be-identified video data from video stream data, and extract image data and audio data from the to-be-identified video data.

The marking recognition processing module 503 is configured to input the image data into a preset marking behavior recognition model to obtain a marking behavior recognition result, and input the audio data into a preset marking speech recognition model to obtain a marking speech recognition result.

The marking result obtaining module 505 is configured to obtain a marking recognition result based on the marking behavior recognition result, the marking speech recognition result, and a preset marking triggering rule.

The cutting identifier adding module 507 is configured to add a cutting point identifier to the to-be-identified video data when a type of the marking recognition result is a marking operation.

The video cutting module 509 is configured to perform cutting processing on the video stream data based on the cutting point identifier to obtain video segment data.

In an embodiment, the identified-data extraction module 501 includes a video stream obtaining unit, an identification length determining unit, and an identified-data extraction unit. The video stream obtaining unit is configured to obtain the video stream data. The identification length determining unit is configured to determine a video stream identification length. The identified-data extraction unit is configured to extract the to-be-identified video data from the video stream data based on the video stream identification length.

In an embodiment, the marking recognition processing module 503 includes an identification determining unit, a recognition model query unit, a feature data extraction unit, and a marking recognition unit. The identification determining unit is configured to determine identification information of a business person corresponding to the to-be-identified video data. The recognition model query unit is configured to query a preset marking behavior recognition model and a preset marking speech recognition model separately corresponding to the identification information. The feature data extraction unit is configured to extract image feature data from the image data, and extract audio feature data from the audio data. The marking recognition unit is configured to input the image feature data into the marking behavior recognition model to obtain a marking behavior recognition result, and input the audio feature data into the marking speech recognition model to obtain a marking speech recognition result.

In an embodiment, the apparatus further includes a historical data obtaining module, a historical data classification module, a behavior recognition model training module, and a speech recognition model training module. The historical data obtaining module is configured to obtain historical behavior image data and historical marking speech data from a business system. The historical data classification module is configured to classify the historical behavior image data and the historical marking speech data by business person to obtain historical behavior image data corresponding to each business person and historical marking speech data corresponding to each business person. The behavior recognition model training module is configured to train the historical behavior image data corresponding to each business person to obtain the marking behavior recognition model. The speech recognition model training module is configured to train the historical marking speech data corresponding to each business person to obtain the marking speech recognition model.

In an embodiment, the marking result obtaining module 505 includes a triggering rule query unit, a behavior comparison unit, a speech comparison unit, and a marking result obtaining unit. The triggering rule query unit is configured to query a preset marking triggering rule, where the marking triggering rule includes a behavior triggering rule and a speech triggering rule. The behavior comparison unit is configured to compare the marking behavior recognition result with the behavior triggering rule to obtain a behavior triggering result. The speech comparison unit is configured to compare the marking speech recognition result with the speech triggering rule to obtain a speech triggering result. The marking result obtaining unit is configured to obtain the marking recognition result based on the behavior triggering result and the speech triggering result.

In an embodiment, the apparatus further includes a cutting instruction receiving module, a to-be-cut frame determining module, an identifier adding module, and a cutting processing module. The cutting instruction receiving module is configured to, when receiving a marking-based cutting instruction, determine a cutting moment value of the marking-based cutting instruction. The to-be-cut frame determining module is configured to determine a to-be-cut video frame corresponding to the cutting moment value from the to-be-identified video data. The identifier adding module is configured to add a cutting point identifier to the to-be-cut video frame. The cutting processing module is configured to return to the step of performing cutting processing on the video stream data based on the cutting point identifier to obtain video segment data.

In an embodiment, the apparatus further includes an audio segment extraction module, a speech recognition model query module, a transcription data obtaining module, and a video segment storage module. The audio segment extraction module is configured to extract audio segment data from the video segment data. The speech recognition model query module is configured to query a preset speech recognition model. The transcription data obtaining module is configured to input the audio segment data into the speech recognition model to obtain transcription data of the video segment data. The video segment storage module is configured to determine a business type corresponding to the video segment data based on the transcription data, and store the video segment data in a storage location corresponding to the business type.

For specific definitions of the video cutting apparatus, reference may be made to the foregoing definitions of the video cutting method, and details are not described herein again. All or some of the modules in the foregoing video cutting apparatus may be implemented by using software, hardware, and a combination thereof. Each of the foregoing modules may be embedded in or independent of a processor in a computer device in the form of hardware, or may be stored in a memory in the computer device in the form of software to enable the processor to conveniently invoke and execute operations corresponding to each of the foregoing modules.

In an embodiment, a computer device is provided. The computer device may be a server. An internal structural diagram of the computer device may be shown in FIG. 6. The computer device includes a processor, a memory, and a network interface that are connected to each other by using a system bus. The processor of the computer device is configured to provide computing and control capabilities. The memory of the computer device includes a non-volatile storage medium and an internal memory. The non-volatile storage medium stores an operating system and a computer-readable instruction. The internal memory provides an environment for running the operating system and the computer-readable instruction in the non-volatile storage medium. The network interface of the computer device is configured to communicate with an external terminal through a network connection. The computer-readable instruction is executed by the processor to implement a video cutting method.

A person skilled in the art can understand that the structure shown in FIG. 6 is merely a block diagram of a partial structure related to the solution of this application, and does not constitute a limitation on the computer device to which the solution of this application is applied. Specifically, the computer device may include more or fewer components than those shown in the figure, or combine some components, or have different component arrangements.

A computer device is provided, and includes a memory and one or more processors. The memory stores a computer-readable instruction. When the computer-readable instruction is executed by the one or more processors, the steps of the video cutting method in any one of the embodiments of this application are implemented.

One or more non-volatile storage media that store a computer-readable instruction are provided. When the computer-readable instruction is executed by one or more processors, the one or more processors are enabled to implement the steps of the video cutting method in any one of the embodiments of this application.

A person of ordinary skill in the art may understand that all or some of the processes in the methods in the foregoing embodiments may be implemented by a computer-readable instruction instructing related hardware. The computer-readable instruction may be stored in a non-volatile computer-readable storage medium, and when the computer-readable instruction is executed, the processes in the embodiments of the methods may be implemented. Any reference to a memory, a storage, a database, or other media used in the various embodiments provided by this application may include a non-volatile memory and/or a volatile memory. The non-volatile memory may include a Read-Only Memory (ROM), a Programmable ROM (PROM), an Electrically Programmable ROM (EPROM), an Electrically Erasable Programmable ROM (EEPROM), or a flash memory. The volatile memory may include a Random Access Memory (RAM) or an external cache memory. As description rather than limitation, the RAM can be obtained in a plurality of forms, such as a static RAM (SRAM), a dynamic RAM (DRAM), a synchronous DRAM (SDRAM), a double data rate SDRAM (DDRSDRAM), an enhanced SDRAM (ESDRAM), a Synchlink DRAM (SLDRAM), a Rambus direct RAM (RDRAM), a direct Rambus dynamic RAM (DRDRAM), and a Rambus dynamic RAM (RDRAM).

The technical features of the foregoing embodiments may be randomly combined. For brevity of description, not all possible combinations of the technical features of the foregoing embodiments are described. However, all the combinations of these technical features should be considered to be within the scope of this specification provided that the combinations are not contradictory.

The foregoing embodiments are merely several implementations of this application, and description of the implementations is relatively specific and detailed, but shall not be understood as a limitation on the scope of the present invention. It should be noted that a person of ordinary skill in the art may make several variations and improvements without departing from the concept of this application, and the variations and improvements shall fall within the protection scope of this application. Therefore, the protection scope of this application patent shall be subject to the appended claims.

## Claims

1. A video cutting method, comprising:
extracting to-be-identified video data from video stream data, and extracting image data and audio data from the to-be-identified video data;
inputting the image data into a preset marking behavior recognition model to obtain a marking behavior recognition result, and inputting the audio data into a preset marking speech recognition model to obtain a marking speech recognition result;
obtaining a marking recognition result based on the marking behavior recognition result, the marking speech recognition result, and a preset marking triggering rule;
adding a cutting point identifier to the to-be-identified video data when a type of the marking recognition result is a marking operation; and
performing cutting processing on the video stream data based on the cutting point identifier to obtain video segment data.

2. The method according to claim 1, wherein the extracting to-be-identified video data from video stream data comprises:
obtaining the video stream data;
determining a video stream identification length; and
extracting the to-be-identified video data from the video stream data based on the video stream identification length.

3. The method according to claim 1, wherein the inputting the image data into a preset marking behavior recognition model to obtain a marking behavior recognition result, and inputting the audio data into a preset marking speech recognition model to obtain a marking speech recognition result comprises:
determining identification information of a business person corresponding to the to-be-identified video data;
querying a preset marking behavior recognition model and a preset marking speech recognition model separately corresponding to the identification information;
extracting image feature data from the image data, and extracting audio feature data from the audio data; and
inputting the image feature data into the marking behavior recognition model to obtain a marking behavior recognition result, and inputting the audio feature data into the marking speech recognition model to obtain a marking speech recognition result.

4. The method according to claim 3, wherein before the querying a preset marking behavior recognition model and a preset marking speech recognition model separately corresponding to the identification information, the method further comprises:
obtaining historical behavior image data and historical marking speech data from a business system;
classifying the historical behavior image data and the historical marking speech data by business person to obtain historical behavior image data corresponding to each business person and historical marking speech data corresponding to each business person;
training the historical behavior image data corresponding to each business person to obtain the marking behavior recognition model; and
training the historical marking speech data corresponding to each business person to obtain the marking speech recognition model.

5. The method according to claim 1, wherein the obtaining a marking recognition result based on the marking behavior recognition result, the marking speech recognition result, and a preset marking triggering rule comprises:
querying a preset marking triggering rule, wherein the marking triggering rule comprises a behavior triggering rule and a speech triggering rule;
comparing the marking behavior recognition result with the behavior triggering rule to obtain a behavior triggering result;
comparing the marking speech recognition result with the speech triggering rule to obtain a speech triggering result; and
obtaining the marking recognition result based on the behavior triggering result and the speech triggering result.

6. The method according to claim 5, wherein the obtaining the marking recognition result based on the behavior triggering result and the speech triggering result comprises:
performing an OR operation on the behavior triggering result and the speech triggering result to obtain the marking recognition result.

7. The method according to claim 1, wherein the adding a cutting point identifier to the to-be-identified video data when a type of the marking recognition result is a marking operation comprises:
determining the type of the marking recognition result;
querying a preset label adding rule when the type of the marking recognition result is a marking operation; and
determining a key frame from the to-be-identified video data based on the label adding rule, and adding a cutting label to the key frame, wherein the cutting point identifier comprises the cutting label.

8. The method according to any one of claims 1 to 7, further comprising:
when receiving a marking-based cutting instruction, determining a cutting moment value of the marking-based cutting instruction;
determining a to-be-cut video frame corresponding to the cutting moment value from the to-be-identified video data;
adding a cutting point identifier to the to-be-cut video frame; and
returning to the step of performing cutting processing on the video stream data based on the cutting point identifier to obtain video segment data.

9. The method according to claim 8, wherein after the video segment data is obtained, the method further comprises:
extracting audio segment data from the video segment data;
querying a preset speech recognition model;
inputting the audio segment data into the speech recognition model to obtain transcription data of the video segment data; and
determining a business type corresponding to the video segment data based on the transcription data, and storing the video segment data in a storage location corresponding to the business type.

10. The method according to claim 9, wherein the determining a business type corresponding to the video segment data based on the transcription data, and storing the video segment data in a storage location corresponding to the business type comprises:
extracting a business keyword from the transcription data;
determining the business type corresponding to the video segment data based on the business keyword;
querying a preset storage location corresponding to the business type; and
storing the video segment data in the storage location.

11. A video cutting apparatus, comprising:
an identified-data extraction module, configured to extract to-be-identified video data from video stream data, and extract image data and audio data from the to-be-identified video data;
a marking recognition processing module, configured to input the image data into a preset marking behavior recognition model to obtain a marking behavior recognition result, and input the audio data into a preset marking speech recognition model to obtain a marking speech recognition result;
a marking result obtaining module, configured to obtain a marking recognition result based on the marking behavior recognition result, the marking speech recognition result, and a preset marking triggering rule;
a cutting identifier adding module, configured to add a cutting point identifier to the to-be-identified video data when a type of the marking recognition result is a marking operation; and
a video cutting module, configured to perform cutting processing on the video stream data based on the cutting point identifier to obtain video segment data.

12. The apparatus according to claim 11, wherein the identified-data extraction module comprises:
a video stream obtaining unit, configured to obtain the video stream data;
an identification length determining unit, configured to determine a video stream identification length; and
an identified-data extraction unit, configured to extract the to-be-identified video data from the video stream data based on the video stream identification length.

13. The apparatus according to claim 11, wherein the marking recognition processing module comprises:
an identification determining unit, configured to determine identification information of a business person corresponding to the to-be-identified video data;
a recognition model query unit, configured to query a preset marking behavior recognition model and a preset marking speech recognition model separately corresponding to the identification information;
a feature data extraction unit, configured to extract image feature data from the image data, and extract audio feature data from the audio data; and
a marking recognition unit, configured to input the image feature data into the marking behavior recognition model to obtain a marking behavior recognition result, and input the audio feature data into the marking speech recognition model to obtain a marking speech recognition result.

14. The apparatus according to claim 13, wherein the apparatus further comprises:
a historical data obtaining module, configured to obtain historical behavior image data and historical marking speech data from a business system;
a historical data classification module, configured to classify the historical behavior image data and the historical marking speech data by business person to obtain historical behavior image data corresponding to each business person and historical marking speech data corresponding to each business person;
a behavior recognition model training module, configured to train the historical behavior image data corresponding to each business person to obtain the marking behavior recognition model; and
a speech recognition model training module, configured to train the historical marking speech data corresponding to each business person to obtain the marking speech recognition model.

15. A computer device, comprising a memory and one or more processors, wherein the memory stores a computer-readable instruction, and when the computer-readable instruction is executed by the one or more processors, the one or more processors are enabled to perform the following steps:
extracting to-be-identified video data from video stream data, and extracting image data and audio data from the to-be-identified video data;
inputting the image data into a preset marking behavior recognition model to obtain a marking behavior recognition result, and inputting the audio data into a preset marking speech recognition model to obtain a marking speech recognition result;
obtaining a marking recognition result based on the marking behavior recognition result, the marking speech recognition result, and a preset marking triggering rule;
adding a cutting point identifier to the to-be-identified video data when a type of the marking recognition result is a marking operation; and
performing cutting processing on the video stream data based on the cutting point identifier to obtain video segment data.

16. The computer device according to claim 15, wherein when executing the computer-readable instruction, the processor further performs the following steps:
obtaining the video stream data;
determining a video stream identification length; and
extracting the to-be-identified video data from the video stream data based on the video stream identification length.

17. The computer device according to claim 15, wherein when executing the computer-readable instruction, the processor further performs the following steps:
determining identification information of a business person corresponding to the to-be-identified video data;
querying a preset marking behavior recognition model and a preset marking speech recognition model separately corresponding to the identification information;
extracting image feature data from the image data, and extracting audio feature data from the audio data; and
inputting the image feature data into the marking behavior recognition model to obtain a marking behavior recognition result, and inputting the audio feature data into the marking speech recognition model to obtain a marking speech recognition result.

18. One or more non-volatile computer-readable storage media that store a computer-readable instruction, wherein when the computer-readable instruction is executed by one or more processors, the one or more processors are enabled to perform the following steps:
extracting to-be-identified video data from video stream data, and extracting image data and audio data from the to-be-identified video data;
inputting the image data into a preset marking behavior recognition model to obtain a marking behavior recognition result, and inputting the audio data into a preset marking speech recognition model to obtain a marking speech recognition result;
obtaining a marking recognition result based on the marking behavior recognition result, the marking speech recognition result, and a preset marking triggering rule;
adding a cutting point identifier to the to-be-identified video data when a type of the marking recognition result is a marking operation; and
performing cutting processing on the video stream data based on the cutting point identifier to obtain video segment data.

19. The storage medium according to claim 18, wherein when executing the computer-readable instruction, the processor further performs the following steps:
obtaining the video stream data;
determining a video stream identification length; and
extracting the to-be-identified video data from the video stream data based on the video stream identification length.

20. The storage medium according to claim 18, wherein when executing the computer-readable instruction, the processor further performs the following steps:
determining identification information of a business person corresponding to the to-be-identified video data;
querying a preset marking behavior recognition model and a preset marking speech recognition model separately corresponding to the identification information;
extracting image feature data from the image data, and extracting audio feature data from the audio data; and
inputting the image feature data into the marking behavior recognition model to obtain a marking behavior recognition result, and inputting the audio feature data into the marking speech recognition model to obtain a marking speech recognition result.
